# EUROPEAN PATENT APPLICATION

(11) **EP 2 773 058 A1**
(43) Date of publication of application: **03.09.2014**
(21) Application number: 13157089.7
(22) Date of filing: 27.02.2013
(51) Int. Cl.: H04L 1/00

(54) **Method for broadcasting symbols of small objects with temporal diversity, and associated processing device**

(71) Applicant: ALCATEL LUCENT, 92100 Boulogne-Billancourt (FR)
(72) Inventor: Young, Tomas Shun-Fan, MURRAY HILL, NJ New Jersey 07974-0636 (US); Jacob, Claude, 35000 RENNES (FR); Phan, Cao Thanh, 35000 RENNES (FR); Wang, Xin, MURRAY HILL, NJ New Jersey 07974-0636 (US)
(74) Representative: Camus, Olivier Jean-Claude

(57) **Abstract**

A device (D) is intended for processing objects for a wireless broadcasting system (S), and comprises i) an encoding means (EM) arranged for encoding with a forward error correction a small object to be broadcasted into a number of encoded symbols that is greater than a sufficient symbol number to allow distribution into several packet data units, and ii) a distribution means (DM) arranged for distributing these encoded symbols into several packet data units in order the wireless broadcasting system (S) broadcasts them separately one from the other by a time interval sufficiently longer than an expected burst error duration.

## Description

### Technical field

The present invention relates to wireless broadcasting systems, and more precisely to encoding of symbols defining small objects before they are broadcasted by such wireless broadcasting systems.

One means here by "small object" any type of group (or file) of binary data which can be encoded into a small number of symbols that can be integrated into a very small number of packet data units (or PDUs). For instance, it may be a file of data defining a small text, or a voice frame (such as the one used by VoIP or PTT applications), or else an audio track that is associated to a video track into a multimedia content stream.

### Background of the invention

Most of conventional wireless broadcast systems that deliver objects apply application level FEC ("Forward Error Correction") to each object in order to improve the receiver's ability to deal with erasures encountered over wireless transmission links. So, during encoding object data are partitioned into symbols that are encoded with FEC to produce encoded symbols, comprising source and repair symbols, which are integrated into packet data units (or PDUs).

In general the principle of this encoding method works. But it does not take into account characteristic of a wireless broadcasting system such as fading environment, and as a result is less effective at successfully delivering small objects. Indeed, encoded symbols of source objects are sent back-to-back over a wireless channel, where a burst error is likely to erase multiple successive physical layer PDUs, thereby erasing a large portion of encoded symbols of small objects, because they are carried by a small number of physical layer PDUs. For instance, in LTE broadcast (i.e. MBMS for E-UTRAN) the source and repair symbols are transported over UDP/IP packets and carried by physical layer PDUs occupying one or more radio subframes of 1 ms each.

### Summary of the invention

So the invention aims notably at improving broadcast of small objects in wireless environment.

To this effect the invention notably provides a method, intended for broadcasting encoded symbols defining small objects into a wireless broadcasting system, and comprising a step during which each small object to be broadcasted is encoded with a forward error correction into a number of encoded symbols that is needed to allow distribution into several packet data units to be broadcasted separately one from the other by a time interval sufficiently longer than an expected burst error duration. The number of small object encoded symbols needed to overcome impedance in wireless channels is typically larger than the minimum number of encoded symbols based on encoding efficiency under generalized channel conditions.

The method according to the invention may include additional characteristics considered separately or combined, and notably:
- in a first embodiment the number of source blocks produced by the small object may be increased;
   ➢ the symbol size may be reduced compared to a predefined size to get a number of small object encoded symbols that is greater than the minimum symbol number;
   ➢ in the case where the small objects are associated to large objects, encoded symbol(s) of these small objects may be interleaved with a chosen amount of encoded symbols of these large objects, before being broadcasted; the number of source blocks produced by small and large objects can be aligned to facilitate interleaving between source blocks;
- in a second embodiment the encoding of symbols of each small object may produce a chosen ratio of repair symbols over source symbols that is greater than a predefined threshold, in order to allow the number of encoded symbols of each small object to be greater than the minimum symbol number, and to allow interleaving between packet data units;
   ➢ in the case where the small objects are associated to large objects, each packet data unit comprising encoded symbol(s) of these small objects may be interleaved with a chosen amount of other packet data units in which encoded symbols of these large objects are distributed, before being broadcasted;
   ➢ the amount of interleaving may be chosen to spread out the encoded symbols of the small objects beyond the expected burst error duration of a wireless fading channel expected to be encountered during broadcasting;
- the encoded symbols of the large objects may have the predefined size (i.e. a size larger than the size of the small object symbols) and/or may comprise a ratio of repair symbols over source symbols that is equal to the predefined threshold (i.e. smaller than the equivalent ratio of the small objects).

The invention also provides a computer program product comprising a set of instructions arranged for performing a method such as the one above introduced to allow broadcasting of encoded symbols defining at least small objects into a wireless broadcasting system.

The invention also provides a device, intended for processing objects for a wireless broadcasting system, and comprising:
- an encoding means arranged for encoding with a forward error correction a small object to be broadcasted into a number of encoded symbols that is greater than a minimum symbol number to allow distribution into several packet data units, and
- a distribution means arranged for distributing these encoded symbols into several packet data units in order the wireless broadcasting system broadcasts them separately one from the other by a time interval sufficiently longer than an expected burst error duration.

The invention also provides an electronic equipment, intended for equipping a wireless broadcasting system, and comprising a device such as the one above introduced.

### Brief description of the figures

Other features and advantages of the invention will become apparent on examining the detailed specifications hereafter and the appended drawings, wherein:
- figure 1 schematically and functionally illustrates a wireless broadcasting system comprising an electronic equipment equipped with a device according to the invention and to which are connected a content server and a communication equipment,
- figure 2 schematically illustrates a first example of embodiment of a method according to the invention, and
- figure 3 schematically illustrates a second example of embodiment of a method according to the invention.

### Detailed description of the preferred embodiment

The appended drawings may serve not only to complete the invention, but also to contribute to its understanding, if need be.

The invention aims, notably, at offering a method intended for broadcasting encoded symbols defining small objects SO into a wireless broadcasting system S, and an associated processing device D.

In the following description it will be considered, as example, that the wireless broadcasting system S is of a LTE type ("Long Term Evolution") and offers a MBMS service for E-UTRAN allowing transport of encoded source SS and repair RS symbols over UDP/IP packets carried by physical layer packet data units (or PDUs). But the invention is not limited to this type of wireless broadcasting system. Indeed, it concerns any type of wireless broadcasting system capable of broadcasting encoded symbols defining small SO and large LO objects that are made of groups (or files) of binary data. For instance, it could be also a UMTS or CDMA system offering a cellular broadcast technology.

Moreover, in the following description it will be considered, as example, that each small object SO is a group (or segment) of data of an audio track, and that is each large object LO is a group of data of a video track that is associated to an audio track into a multimedia content stream. An application of LTE broadcast is effectively the delivery of a DASH multimedia stream with separate audio and video tracks, where the audio track is characterized by small audio segments constituting respectively small objects SO. But the invention is not limited to this type of small object. Indeed, a small object could be also a small text or a voice frame (such as the one used by VoIP or PTT applications), for instance.

As mentioned above, the invention notably proposes a method intended for broadcasting encoded symbols defining at least small objects SO, and possible associated large objects LO, into a wireless broadcasting system S.

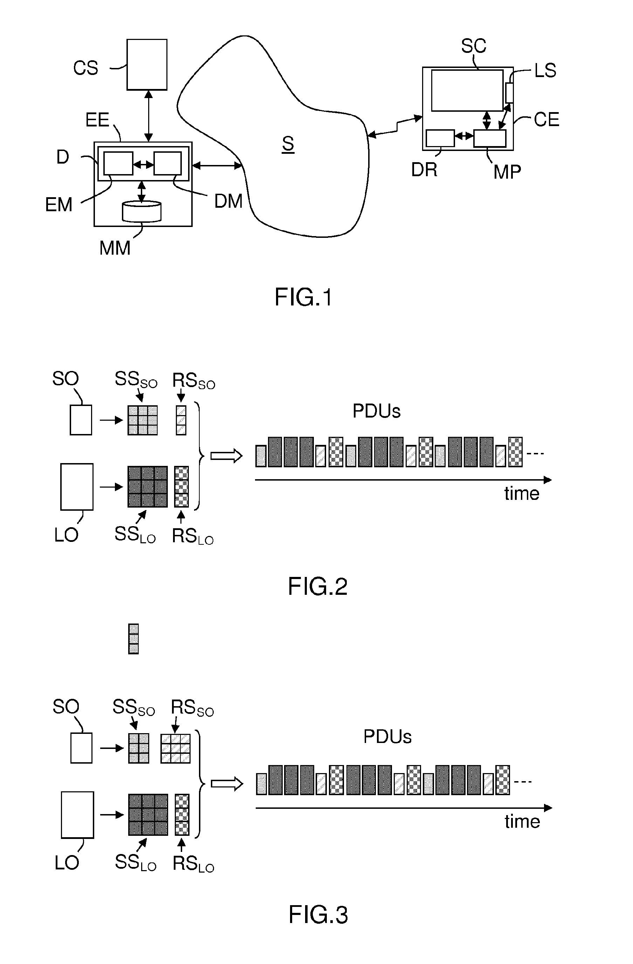

For instance, and as illustrated in figure 1, the initial small objects SO and possible associated large objects LO are complementary parts of multimedia contents, provided by a content server CS, and to be broadcasted by this wireless broadcasting system S to wireless communication equipments CE, after having been transformed into encoded symbols by a processing device (or coder) D equipping an electronic equipment EE fed by the content server CS.

In the non-limiting case of a MBMS service for E-UTRAN, the processing device D may be a BMSC, for instance.

For instance, and as illustrated in figure 1, this electronic equipment EE comprises a memory means MM arranged for storing the multimedia contents (here made of small SO and large LO objects) received from the content server CS, before they are processed by the processing device D to be broadcasted by the wireless broadcasting system S.

As illustrated in figure 1, a wireless communication equipment CE comprises a decoder DC that is arranged for decoding received broadcasted encoded symbols to rebuild the small objects SO (and the possible associated large objects LO) they defined, a media player MP arranged for requesting and/or using these rebuilt small objects SO and possible rebuilt large objects LO, a screen SC for displaying the possible rebuilt large objects LO defining parts of a video (or of a picture or a text), and at least one loudspeaker LS for diffusing the rebuilt small objects SO defining parts of an audio file.

For instance, a communication equipment CE may be a smartphone, a personal digital assistant, a laptop, a wireless set-top box, a wireless game console, or a wireless connected television.

The (processing) device D is intended for implementing a broadcasting method according to the invention.

This broadcasting method comprises a step during which each small object SO to be broadcasted is encoded with a forward error correction (or FEC) into a number of encoded symbols that is greater than a minimum symbol number to allow distribution into several packet data units (or PDUs) to be broadcasted separately one from the other by a time interval sufficiently longer than an expected burst error duration.

The minimum symbol number is the number of symbols that is usually produced by a coder of the art from the data of a given small object SO.

By creating temporal diversity, transmission of small objects SO is spread out in time, and over multiple wireless physical layer PDUs, which increases the percentage of successfully delivered encoded symbols to the communication equipment CE.

It is important to note that due to the FEC processing applied during encoding, the encoded symbols comprise not only source symbols SS_{SO} but also repair symbols RS_{SO}.

The method step may be implemented by an encoding means (or module) EM and a distribution means (or module) DM of the processing device D.

Preferably, the processing device D is made of a combination of electronic circuit(s) (or hardware module(s)) and software modules. But this is not mandatory. Indeed, it may be made either of electronic circuit(s) (or hardware modules), or of software modules (and in this case it constitutes a computer program product comprising a set of instructions arranged for performing the broadcasting method when it is executed by processing means).

At least two different embodiments may be implemented to get a number of small object encoded symbols greater than the minimum symbol number.

In a first non-limiting embodiment illustrated in figure 2, the number of small object encoded symbols may be greater than the minimum symbol number to allow interleaving between source encoded symbols.

To this effect, the size of the small object symbols may be reduced compared to a predefined size to get a number of small object encoded symbols that is greater than the minimum symbol number; which results in increased number of source blocks for the small object such that number of source blocks are aligned between objects of different sizes. Different reduced symbol sizes can be applied to source small objects SO of varying sizes.

The predefined size is the size of the symbols that are usually produced by a coder of the art from the data of a given small object SO, but also the data of a given large object LO.

As illustrated in figure 2, in the case of an audio track the encoded symbols SS_{SO} and RS_{SO} produced from its data segments (or small objects) SO may be interleaved with a chosen amount of encoded symbols SS_{LO} and RS_{LO} produced from the large objects LO of the associated video track, during transmission over the wireless broadcast link. For instance, the amount of interleaving may be chosen to spread out symbols from the audio track beyond the typical expected bust error duration of the wireless fading channel that is expected to be encountered in a particular broadcast session. The symbol size of the large objects LO is equal to the above mentioned predefined size, which is larger than the size of the small object symbols, to enable interleaving between small object encoded symbols and large object encoded symbols and to maximize efficiency.

It is important to note that the encoding means EM is also arranged for encoding with a forward error correction each large object LO to be broadcasted into encoded symbols SS_{LO} and RS_{LO}, and the distribution means DM is also arranged for distributing the encoded symbols SS_{LO} and RS_{LO} of each large object LO into several packet data units in order the wireless broadcasting system S broadcasts them.

In a second non-limiting embodiment illustrated in figure 3, the encoding of symbols of each small object SO may produce a chosen ratio of encoded repair symbols RS_{SO} over encoded source symbols SS_{SO} that is greater than a predefined threshold, in order to allow the number of encoded symbols of each small object SO to be greater than the minimum symbol number, and to allow interleaving between packet data units (or PDUs).

The predefined threshold is the ratio of encoded repair symbols RS_{SO} over encoded source symbols SS_{SO} that is used by a coder of the art when applying FEC. It is generally the same for small SO and large LO objects.

In this second embodiment, in the case of an audio track the encoded symbols SS_{SO} and RS_{SO} produced from its data segments (or small objects) SO are distributed into multiple PDUs which are then interleaved with other PDUs, comprising the encoded symbols SS_{LO} and RS_{LO} produced from the large objects LO of the associated video track, during transmission over the wireless broadcast link. This interleaving is carried out by the distribution means DM. For instance, the amount of interleaving may be chosen to spread out symbols from the audio track beyond the typical expected bust error duration of the wireless fading channel that is expected to be encountered in a particular broadcast session.

As illustrated in figure 3, it is possible to generate more encoded repair symbols RS_{SO} for the small objects SO (audio track), thus increasing the total number of encoded symbols SS_{SO} + RS_{SO} for these small objects SO, to enable (here) interleaving between audio and video encoded symbols, provided that the transport layer protocol can clearly identify encoded symbols to the receiver.

This invention improves the wireless broadcast quality of small objects and ensures good end user experience. This invention also benefits wireless broadcast of non-streaming media by reducing the amount of post-broadcast symbol repair/retransmission.

The invention is not limited to the embodiments of broadcasting method, processing device, electronic equipment and communication equipment described above, only as examples, but it encompasses all alternative embodiments which may be considered by one skilled in the art within the scope of the claims hereafter.

## Claims

1. Method for broadcasting encoded symbols defining small objects (SO) into a wireless broadcasting system (S), said method comprising a step during which each small object (SO) to be broadcasted is encoded with a forward error correction into a number of encoded symbols that is greater than a sufficient symbol number to allow distribution into several packet data units to be broadcasted separately one from the other by a time interval sufficiently longer than an expected burst error duration.

2. Method according to claim 1, wherein a size of said number of encoded symbols is greater than said sufficient symbol number to allow interleaving between encoded source symbols.

3. Method according to claim 2, wherein said symbol size is reduced compared to a predefined size, to get a number of small object encoded symbols greater than said sufficient symbol number.

4. Method according to one of claims 2 and 3, wherein, in the case where said small objects (SO) are associated to large objects (LO), encoded symbol(s) of said small objects are interleaved with a chosen amount of encoded symbols of said large objects, before being broadcasted.

5. Method according to claim 1, wherein said encoding of symbols of each small object (SO) produces a chosen ratio of repair symbols over source symbols that is greater than a predefined threshold, in order to allow said number of encoded symbols of each small object (SO) to be greater than said sufficient symbol number, and to allow interleaving between packet data units.

6. Method according to claim 5, wherein, in the case where said small objects (SO) are associated to large objects (LO), each packet data unit comprising encoded symbol(s) of said small objects (SO) is interleaved with a chosen amount of other packet data units in which encoded symbols of said large objects (LO) are distributed, before being broadcasted.

7. Method according to claim 6, wherein said amount of interleaving is chosen to spread out said encoded symbols of said small objects (SO) beyond said expected burst error duration of a wireless fading channel expected to be encountered during said broadcasting.

8. Method according to one of claims 4, 6 and 7, wherein said encoded symbols of said large objects (LO) have a predefined size and/or comprise a ratio of repair symbols over source symbols smaller than a ratio of repair symbols over source symbols of said small objects (SO).

9. Computer program product comprising a set of instructions arranged for performing the method according to one of the preceding claims to allow broadcasting of encoded symbols defining at least small objects (SO) into a wireless broadcasting system (S).

10. Device (D) for processing objects (SO, LO) for a wireless broadcasting system (S), said device (D) comprising i) an encoding means (EM) arranged for encoding with a forward error correction a small object (SO) to be broadcasted into a number of encoded symbols that is greater than a sufficient symbol number to allow distribution into several packet data units, and ii) a distribution means (DM) arranged for distributing said encoded symbols into several packet data units in order said wireless broadcasting system (S) broadcasts them separately one from the other by a time interval sufficiently longer than an expected burst error duration.

11. Electronic equipment (EE) for a wireless broadcasting system (S), said electronic equipment (EE) comprising a device (D) according to claim 10.
